# EUROPEAN PATENT APPLICATION

(11) **EP 2 398 105 A1**
(43) Date of publication of application: **21.12.2011**
(21) Application number: 11170510.9
(22) Date of filing: 20.06.2011
(51) Int. Cl.: H01M 10/0567, H01M 10/0525, H01M 6/16, H01M 4/485, H01M 4/02, H01M 10/42

(54) **Lithium battery and method of manufacturing the same**

(30) Priority: 21.06.2010 KR 20100058623
(71) Applicant: Samsung SDI Co., Ltd., Yongin-si, Gyeonggi-do (KR)
(72) Inventor: Lim, Jin-Hyunk, Gyeonggi-do (KR); Kim, Jin-Sung, Gyeonggi-do (KR); Han, Su-Hee, Gyeonggi-do (KR); Park, Na-Rae, Gyeonggi-do (KR); Oh, Mi-Hyeun, Gyeonggi-do (KR)
(74) Representative: Sampson, Eimear

(57) **Abstract**

The present invention provides lithium batteries including negative electrodes containing lithium titanate negative active materials, and methods of manufacturing the lithium batteries. The lithium batteries further comprise a first layer on the negative electrode, the layer comprising a reaction product of a first material with a second and/or a third material, wherein the first material comprises at least one compound selected from formula 1 and formula 2. Formula 1 Formula 2

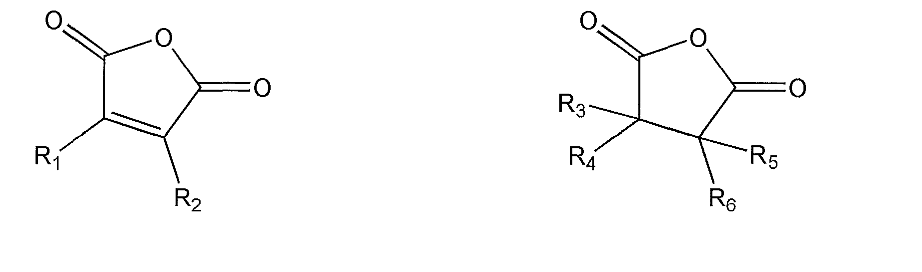

## Description

The present invention relates to a lithium battery including a negative electrode including a negative active material, and a method of manufacturing the lithium battery.

Generally, a lithium battery converts chemical energy generated by electrochemical redox reactions between chemical substances into electrical energy. A typical lithium battery includes a positive electrode, a negative electrode, and an electrolyte.

Recently, as electronic devices increasingly demand high performance, batteries used therein must have high capacity and high power output. In order to manufacture a battery having high capacity, an active material having high capacity or high battery charging voltage may be used.

In this regard, there is a demand to reduce swelling of the lithium battery in order to improve the lifetime characteristics and high-temperature stability of the lithium battery.

According to a first aspect of the present invention, there is provided a lithium battery including a positive electrode, a negative electrode, a first electrolyte, and a negative electrode layer on the negative electrode. The negative electrode includes a negative active material containing lithium titanate. The first electrolyte includes a nonaqueous organic solvent and a lithium salt. The negative electrode layer is on at least a portion of the surface of the negative electrode, and includes a reaction product of a first material with either or both of a second material and a third material. The first material is selected from compounds represented by Formula 1 below, compounds represented by Formula 2 below, and combinations thereof. The second material is a component or combination of components contained in the first electrolyte, and the third material is a component or combination of components contained in the negative electrode.

**Formula 1 Formula 2**

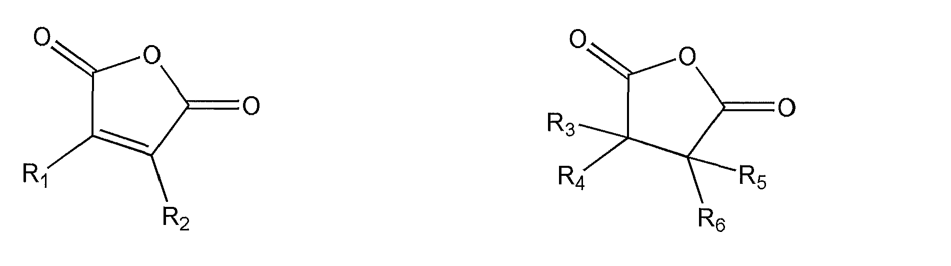

In Formulae 1 and 2, R₁ through R₆ are each independently selected from hydrogen atoms; halogen atoms; hydroxyl groups; C₁-C₃₀ alkyl groups; C₂-C₃₀ alkenyl groups; C₁-C₃₀ alkoxy groups; C₅-C₃₀ aryl groups; C₂-C₃₀ heteroaryl groups; C₁-C₃₀ alkyl groups substituted with at least one substituent selected from hydroxyl groups, halogen atoms, C₁-C₃₀ alkyl groups, and C₁-C₃₀ alkoxy groups; C₂-C₃₀ alkenyl groups substituted with at least one substituent selected from hydroxyl groups, halogen atoms, C₁-C₃₀ alkyl groups, and C₁-C₃₀ alkoxy groups; C₁-C₃₀ alkoxy groups substituted with at least one substituent selected from hydroxyl groups, halogen atoms, C₁-C₃₀ alkyl groups, and C₁-C₃₀ alkoxy groups; C₅-C₃₀ aryl groups substituted with at least one substituent selected from hydroxyl groups, halogen atoms, C₁-C₃₀ alkyl groups, and C₁-C₃₀ alkoxy groups; and C₂-C₃₀ heteroaryl groups substituted with at least one substituent selected from hydroxyl groups, halogen atoms, C₁-C₃₀ alkyl groups, and C₁-C₃₀ alkoxy groups.

In an embodiment, in Formulae 1 and 2, R₁ through R₆ may each be independently selected from hydrogen atoms; -F; methyl groups; ethyl groups; propyl groups; butyl groups; pentyl groups; hexyl groups; heptyl groups; octyl groups; methoxy groups; ethoxy groups; propoxy groups; butoxy groups; pentoxy groups; methyl groups substituted with at least one substituent selected from hydroxyl groups and -F; ethyl groups substituted with at least one substituent selected from hydroxyl groups and -F; propyl groups substituted with at least one substituent selected from hydroxyl groups and -F; butyl groups substituted with at least one substituent selected from hydroxyl groups and -F; pentyl groups substituted with at least one substituent selected from hydroxyl groups and -F; hexyl groups substituted with at least one substituent selected from hydroxyl groups and -F; heptyl groups substituted with at least one substituent selected from hydroxyl groups and -F; octyl groups substituted with at least one substituent selected from hydroxyl groups and -F; methoxy groups substituted with at least one substituent selected from hydroxyl groups and -F; ethoxy groups substituted with at least one substituent selected from hydroxyl groups and -F; propoxy groups substituted with at least one substituent selected from hydroxyl groups and -F; butoxy groups substituted with at least one substituent selected from hydroxyl groups and -F; and pentoxy groups substituted with at least one substituent selected from hydroxyl groups and -F.

In an embodiment, in Formulae 1 and 2, R₁ through R₆ are all hydrogen atoms. In an embodiment, the first material is at least one of anhydrous maleic acid or anhydrous succinic acid.

In an embodiment, the first material is contained in the first electrolyte.

The negative electrode may further include a conducting agent.

An O1s spectrum of spectra obtained by irradiating X-ray (having an excitation energy of 1486.8eV) onto the negative electrode layer may include a region A with a binding energy of 530.5eV, a region B with a binding energy of 532.0eV, and a region C with a binding energy of 533.5eV. A ratio of the binding energy intensity of region A to that of region B may be about 1:3 to about 1:7. A ratio of the binding energy intensity of region B to that of region C may be about 10:10 to about 10:1. A ratio of the binding energy intensity of region A to those of regions B and C may be about 2:10:6 (A:B:C).

According to a second aspect of the present invention, a method of manufacturing a lithium battery includes first providing a lithium battery assembly including a positive electrode, a negative electrode including a negative active material containing lithium titanate, and a second electrolyte. The second electrolyte includes a nonaqueous organic solvent, a lithium salt, and a first material containing at least one compound selected from compounds represented by Formula 1 below and compounds represented by Formula 2 below. The method further includes performing a formation process on the lithium battery assembly including aging the lithium battery assembly at a voltage of about 1.5V to about 2.8 V. The lithium battery resulting from the formation process includes a positive electrode, a negative electrode including a negative active material containing lithium titanate, a first electrolyte including a nonaqueous organic solvent and a lithium salt, and a negative electrode layer on at least a portion of the surface of the negative electrode. The negative electrode layer includes a reaction product of the first material from the second electrolyte (i.e. a compound selected from compounds represented by Formula 1 below, compounds represented by Formula 2 below, and combinations thereof) with one or more other components contained in the second electrolyte and/or one or more components of the negative electrode.

**Formula 1 Formula 2**

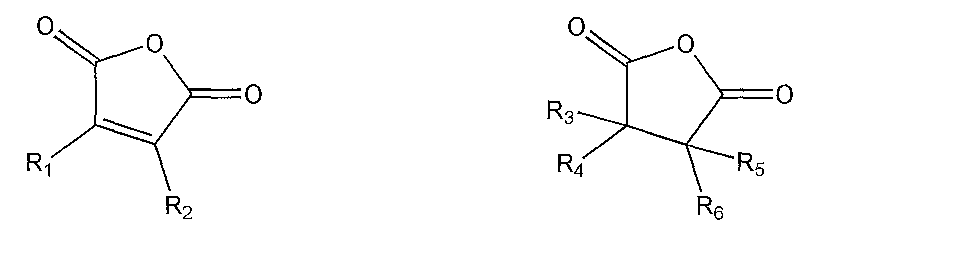

In Formulae 1 and 2, R₁ through R₆ are each be independently selected from hydrogen atoms; halogen atoms; hydroxyl groups; C₁-C₃₀ alkyl groups; C₂-C₃₀ alkenyl groups; C₁-C₃₀ alkoxy groups; C₅-C₃₀ aryl groups; C₂-C₃₀ heteroaryl groups; C₁-C₃₀ alkyl groups substituted with at least one substituent selected from hydroxyl groups, halogen atoms, C₁-C₃₀ alkyl groups, and C₁-C₃₀ alkoxy groups; C₂-C₃₀ alkenyl groups substituted with at least one substituent selected from hydroxyl groups, halogen atoms, C₁-C₃₀ alkyl groups, and C₁-C₃₀ alkoxy groups; C₁-C₃₀ alkoxy groups substituted with at least one substituent selected from hydroxyl groups, halogen atoms, C₁-C₃₀ alkyl groups, and C₁-C₃₀ alkoxy groups; C₅-C₃₀ aryl groups substituted with at least one substituent selected from hydroxyl groups, halogen atoms, C₁-C₃₀ alkyl groups, and C₁-C₃₀ alkoxy groups; and C₂-C₃₀ heteroaryl groups substituted with at least one substituent selected from hydroxyl groups, halogen atoms, C₁-C₃₀ alkyl groups, and C₁-C₃₀ alkoxy groups.

In an embodiment, R₁ through R₆ are all hydrogen atoms.

The first material may be present in the second electrolyte in an amount of about 0.1 to about 10 parts by weight based on 100 parts by weight of the total weight of the nonaqueous organic solvent and the lithium salt.

While performing the formation process on the lithium battery assembly, a negative electrode layer may be formed on at least a portion of the surface of the negative electrode. The negative electrode layer contains a reaction product of the first material in the second electrolyte with one or more other materials in the second electrolyte and/or one or more materials in the negative electrode.

An O1s spectrum of spectra obtained by irradiating X-ray having an excitation energy of 1486.8eV onto the negative electrode layer may include a region A with a binding energy of 530.5eV, a region B with a binding energy of 532.0eV, and a region C with a binding energy of 533.5eV. A ratio of the binding energy intensity of region A to that of region B may be about 1:3 to about 1:7. A ratio of the binding energy intensity of region B to that of region C may be about 10:10 to about 10:1. A ratio of the binding energy intensity of region A to those of regions B and C may be about 2:10:6 (A:B:C).

The second electrolyte may change into the first electrolyte as a result of the formation process. As used herein, the term "second electrolyte" refers to the electrolyte solution that is present "before" the battery assembly is subjected to the formation process. Also, the term "first electrolyte" refers to the electrolyte solution that is present "after" the battery assembly is subjected to the formation process. Therefore the second electrolyte becomes the first electrolyte as a result of the formation process.

The formation process may further include leaving the lithium battery assembly at room temperature for about 48 to about 72 hours prior to aging the lithium battery assembly at a voltage of about 1.5V to about 2.8V.

The first material may be at least one of anhydrous maleic acid or anhydrous succinic acid.

A more complete appreciation of the present invention, and many of the attendant advantages thereof, will be readily apparent as the same becomes better understood by reference to the following detailed description when considered in conjunction with the accompanying drawings, wherein:
Figure 1 is a cross-sectional perspective view of a lithium battery according to an embodiment of the present invention;
Figure 2 is a graph comparing changes in thickness of the lithium batteries manufactured according to Examples 1 to 6 of the present invention and Comparative Examples 1 to 5; and
Figure 3 is an X-ray photoelectron spectroscopy (XPS) spectrum showing the O1s spectrum of the lithium battery of Example 7.

Throughout the description and figures, like reference numerals refer to like elements.

A lithium battery includes: a positive electrode; a negative electrode including a negative active material including lithium titanate; a first electrolyte including a nonaqueous organic solvent and a lithium salt; and a layer. The layer may be disposed on at least a portion of the surface of the negative electrode and may include a reaction product of a first material with at least one of a second or third material. The first material includes a compound selected from compounds represented by Formula 1 below, compounds represented by Formula 2 below, and combinations thereof. The second material includes one or more components of the first electrolyte, and the third material includes one or more components of the negative electrode.

**Formula 1 Formula 2**

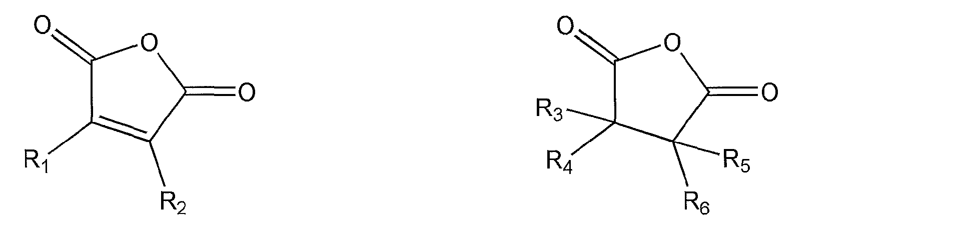

In Formulae 1 and 2, R₁ through R₆ may each independently be selected from hydrogen atoms; halogen atoms; hydroxyl groups; C₁-C₃₀ alkyl groups; C₂-C₃₀ alkenyl groups; C₁-C₃₀ alkoxy groups; C₅-C₃₀ aryl groups; C₂-C₃₀, heteroaryl groups; C₁-C₃₀ alkyl groups substituted with at least one substituent selected from hydroxyl groups, halogen atoms, C₁-C₃₀ alkyl groups, and C₁-C₃₀ alkoxy groups; C₂-C₃₀ alkenyl groups substituted with at least one substituent selected from hydroxyl groups, halogen atoms, C₁-C₃₀ alkyl groups, and C₁-C₃₀ alkoxy groups; C₁-C₃₀ alkoxy groups substituted with at least one substituent selected from hydroxyl groups, halogen atoms, C₁-C₃₀ alkyl groups, and C₁-C₃₀ alkoxy groups; C₅-C₃₀ aryl groups substituted with at least one substituent selected from hydroxyl groups, halogen atoms, C₁-C₃₀ alkyl groups, and C₁-c₃₀ alkoxy groups; and C₂-C₃, heteroaryl groups substituted with at least one substituent selected from hydroxyl groups, halogen atoms, C₁-C₃₀ alkyl groups, and C₁-C₃₀ alkoxy groups.

For example, R₁ through R₆ may each independently be selected from hydrogen atoms; -F; methyl groups; ethyl groups; propyl groups; butyl groups; pentyl groups; hexyl groups; heptyl groups; octyl groups; methoxy groups; ethoxy groups; propoxy groups; butoxy groups; pentoxy groups; methyl groups substituted with at least one substituent selected from hydroxyl groups and -F; ethyl group substituted with at least one substituent selected from hydroxyl groups and -F; propyl groups substituted with at least one substituent selected from hydroxyl groups and -F; butyl groups substituted with at least one substituent selected from hydroxyl groups and -F; pentyl groups substituted with at least one substituent selected from hydroxyl groups and -F; hexyl groups substituted with at least one substituent selected from hydroxyl groups and -F; heptyl groups substituted with at least one substituent selected from hydroxyl groups and -F; octyl groups substituted with at least one substituent selected from hydroxyl groups and -F; methoxy groups substituted with at least one substituent selected from hydroxyl groups and -F; ethoxy groups substituted with at least one substituent selected from hydroxyl groups and -F; propoxy groups substituted with at least one substituent selected from hydroxyl groups and -F; butoxy groups substituted with at least one substituent selected from hydroxyl groups and -F; and pentoxy groups substituted with at least one substituent selected from hydroxyl groups and -F.

For example, R₁ through R₆ may all be hydrogen atoms.

For example, the first material may include a compound represented by Formula 1. For example, the first material may include a compound represented by Formula 1 in which R₁ and R₂ are all hydrogen atoms. Alternatively, the first material may include a compound represented by Formula 2. For example, the first material may include a compound represented by Formula 2 in which R₃ through R₆ are all hydrogen atoms. In an embodiment, the first material may be at least one of anhydrous maleic acid or anhydrous succinic acid.

The negative active material may include lithium titanate. Nonlimiting examples of the lithium titanate include spinel-structured lithium titanate, anatase-structured lithium titanate, and ramsdellite-structured lithium titanate, which are classified according to the crystal structure thereof.

The negative active material may be Li₄₋ₓTi₅O₁₂(0≤x≤3). For example, the negative active material may be Li₄Ti₅O₁₂. However, any suitable material may be used.

The lithium battery including the negative electrode including the lithium titanate may be chargeable or dischargeable at a voltage of, for example, about 1.5V to about 2.8V.

The negative electrode may further include a conducting agent, in addition to the lithium titanate described above.

The conducting agent is used to give the negative electrode conductivity. Any electron conducting material that does not induce a chemical change in the battery may be used. Nonlimiting examples of the conducting agent include carbonaceous materials, such as natural graphite, artificial graphite, carbon black, acetylene black, ketchen black, carbon fibers, and the like; metal-based materials, such as copper, nickel, aluminum, silver, and the like, in powder or fiber form; and conductive materials, including conductive polymers, such as polyphenylene derivatives, and mixtures thereof.

The nonaqueous organic solvent in the first electrolyte may function as a medium for the migration of ions involved in the electrochemical reactions of the lithium battery.

The nonaqueous organic solvent may include a carbonate solvent, an ester solvent, an ether solvent, a ketone solvent, an alcohol solvent, or an aprotic solvent.

Nonlimiting examples of the carbonate solvent include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. However, any suitable carbonate solvent may be used.

Nonlimiting examples of the ester solvent include methyl acetate, ethyl acetate, n-propyl acetate, dimethyl acetate, methyl propionate, ethyl propionate, γ-butyrolactone (GBL), decanolide, valerolactone, mevalonolactone, caprolactone, and the like. However, any suitable ester solvent may be used.

Nonlimiting examples of the ether solvent include dibutyl ether, tetraglyme, diglyme, dimethoxy ethane, 2-methyltetrahydrofuran, tetrahydrofuran, and the like. However, any suitable ether solvent may be used.

A nonlimiting example of the ketone solvent is cyclohexanone. However, any suitable ketone solvent may be used.

Nonlimiting examples of the alcohol solvent include ethyl alcohol, isopropyl alcohol, and the like. However, any suitable alcohol solvent may be used.

Nonlimiting examples of the aprotic solvent include nitriles such as R-CN, in which R is a C₂-C₂₀ linear, branched, or cyclic hydrocarbon-based moiety that may include a double-bonded aromatic ring or an ether bond; amides, such as dimethylformamide; dioxolanes, such as 1,3-dioxolane; sulfolanes; and the like. However, any suitable aprotic solvent may be used.

The above-listed nonaqueous organic solvents may be used alone or in combinations of at least two. If the above-listed nonaqueous organic solvents are used in combination, the ratio of the solvents may vary according to the desired performance of the lithium battery.

For example, the nonaqueous organic solvent may be a mixture of ethylene carbonate (EC) and ethylmethyl carbonate (EMC) in a volume ratio of 3:7. For example, the nonaqueous organic solvent may be a mixture of EC, GBL, and EMC in a volume ratio of 3:3:4.

The lithium salt in the first electrolyte is dissolved in the nonaqueous organic solvent and functions as a source of lithium ions in the lithium battery, and accelerates the migration of lithium ions between the positive electrode and the negative electrode.

Nonlimiting examples of the lithium salt include supporting electrolyte salts selected from LiPF₆, LiBF₄, LiSbF₆, LiAsF₆, LiN (SO₂C₂F₅)₂, Li (CF₃SO₂)₂N, LiC₄F₉SO₃, LiClO_{4.} LiAlO₂, LiAlCl₄, LiN (CₓF₂ₓ₊₁SO₂)(C_{y}F_{2y+1}SO₂) (where x and y are each independently a natural number), LiCl, LiI, and LiB (C₂O₄)₂ (lithium bis(oxalato) borate or LiBOB). Combinations of electrolyte salts may also be used.

The concentration of the lithium salt may be in a range of about 0.1 M to about 2.0 M. For example, the concentration of the lithium salt may be in a range of about 0.6 M to about 2.0 M. When the concentration of the lithium salt is within these ranges, the first electrolyte may have the desired conductivity and viscosity, and thus lithium ions can migrate efficiently.

The first electrolyte may further include an additive capable of improving the low-temperature performance of the lithium battery. Nonlimiting examples of the additive include carbonate-based materials and propane sultone (PS). However, any suitable additive may be used. Furthermore, one additive may be used or a combination of additives may be used.

Nonlimiting examples of the carbonate-based material include vinylene carbonate (VC); vinylene carbonate derivatives having at least one substituent selected from halogen atoms (for example, -F, -Cl, -Br, and -I), cyano groups (CN), and nitro groups (NO₂); and ethylene carbonate (EC) derivatives having at least one substituent selected from halogen atoms (for example, -F, -Cl, -Br, and -1), cyano groups (CN), and nitro groups (NO₂). However, any suitable carbonate-based material may be used.

The first electrolyte may include at least one additive selected from vinylene carbonate (VC), fluoroethylene carbonate (FEC), and propane sultone (PS).

The amount of the additive may be about 10 parts by weight or less based on 100 parts by weight of the total amount of the nonaqueous organic solvent and the lithium salt. For example, the amount of the additive may be in a range of about 0.1 to about 10 parts by weight based on 100 parts by weight of the total amount of the nonaqueous organic solvent and the lithium salt. When the amount of the additive is within these ranges, the lithium battery may have sufficiently improved low-temperature characteristics.

For example, the amount of the additive may be in a range of about 1 to about 5 parts by weight based on 100 parts by weight of the total amount of the nonaqueous organic solvent and the lithium salt. For example, the amount of the additive may be in a range of about 2 to about 4 parts by weight based on 100 parts by weight of the total amount of the nonaqueous organic solvent and the lithium salt. However, any suitable amount of the additive may be used.

For example, the amount of the additive may be 2 parts by weight based on 100 parts by weight of the nonaqueous organic solvent and the lithium salt.

The lithium battery may further include the first material. In this regard, the first electrolyte may further include the first material.

The first material in the first electrolyte (which is present after the formation process) may be, for example, a residue left over from the formation of the negative electrode layer. The amount of the first material in the first electrolyte may vary depending on the amount of the first material initially added to the second electrolyte (which is present before the battery assembly is subjected to the formation process).

The negative electrode layer is disposed on at least a portion of the surface of the negative electrode and includes a reaction product of the first material with at least one of a second material and a third material. The first material includes a compound selected from compounds represented by Formula 1, compounds represented by Formula 2, and combinations thereof. The second material includes at least one component of the first electrolyte, and the third material includes at least one component of the negative electrode.

For example, if the negative electrode includes a conducting agent, the lithium titanate and the conducting agent in the negative electrode may serve as starting materials for reaction with the first material to form the negative electrode layer.

The existence and amount of a target element (e.g., the first material) contained in the first electrolyte of the lithium battery may be analyzed and measured by gas chromatography (GC). Quantitative analysis of the target element may be performed using an internal standard method (ISTD) and/or an external standard method (ESTD).

According to the ISTD, the quantitative analysis may be performed using ethyl acetate (EA) as an internal standard. According to the ESTD, the quantitative analysis may be performed using at least two standards for each concentration of the target element (e.g., the first material) to be analyzed.

A nonlimiting example of a method for quantitatively analyzing the target element (e.g., the first material) contained in the first electrolyte of the lithium battery may include: extracting the first electrolyte from the lithium battery; performing GC on the extracted electrolyte using ISTD and/or ESTD, and collecting data of the target element; and calculating the amount (% by weight or % by volume) of the target element from the data.

Details of the GC analysis are disclosed in Douglas A. Skoog, et al. "Principles of Instrumental Analysis", Fifth edition, pp. 701-722.

The negative electrode layer may cover at least a portion of the surface of the negative electrode. The negative electrode layer may be disposed on the surface of the negative electrode in any of various patterns. For example, the negative electrode layer may be disposed in a localized region on the surface of the negative electrode, or the negative electrode layer may be disposed on the entire surface of the negative electrode.

The negative electrode layer may be formed through an aging process (described further below) at a voltage of about 1.5V to about 2.8V.

The composition of the negative electrode layer may be analyzed using any of various analysis methods. For example, the composition of the negative electrode layer may be analyzed using Fourier Transform-Infrared spectroscopy (FR-IT), X-ray photoelectron spectroscopy (XPS), or the like.

For example, an O1s spectrum of spectra obtained by irradiating X-ray having an excitation energy of 1486.8eV onto the negative electrode layer may include a region A with a binding energy of 530.5eV, a region B with a binding energy of 532.0eV, and a region C with a binding energy of 533.5eV.

The region A may be a region corresponding to an oxide such as lithium titanate. The more of the negative electrode that is covered by the negative electrodes layer, and the thicker the negative electrode layer, the smaller the intensity of region A. The region B may be a region corresponding to a species containing oxygen atoms covalently bonded to carbon atoms, for example, an oxygen atom of carbonate, an oxygen atom of phosphate, or an oxygen atom of polyethylene oxide. Not intending to be bound by a particular theory, it is understood that carbonate may be a starting material that produces a gas (in a lithium battery and/or a lithium battery assembly) that causes the lithium battery to swell after the formation process or when the lithium battery is left at high temperatures. It is also understood that the larger the amount of the starting material remaining, the smaller the amount of the swelling gas produced.

In some embodiments, the O1s spectrum of spectra obtained by irradiating X-ray having an excitation energy of 1486.8eV onto the negative electrode layer may include a region A with a binding energy of 530.5eV, a region B with a binding energy of 532.0eV, and a region C with a binding energy of 533.5 eV. A ratio of the binding energy intensity of region A to that of region B may be in a range of about 1:3 to about 1:7. For example, the ratio of the binding energy intensity of region A to that of region B may be in a range of about 1:4 to about 1:5. For example, the ratio of the binding energy intensity of region A to that of region B may be about 1:5. In addition, a ratio of the binding energy intensity of region B to that of region C may be in a range of about 10:10 to about 10:1. For example, the ratio of the binding energy intensity of region B to that of region C may be in a range of about 10:8 to about 10:4. For example, the ratio of the binding energy intensity of region B to that of region C may be about 10:6. In an embodiment, a ratio of the binding energy intensity of region A to those of regions B and C may be about 2:10:6 (A:B:C). The ratio of the binding energy intensity among the regions A, B, and C may vary depending on the amount of the first material.

The negative electrode layer may substantially prevent continuing side reactions between the negative electrode and the first electrolyte. If the lithium battery described above does not include the negative electrode layer, reactions between the negative active material and the first electrolyte may occur during operation or storage of the lithium battery, which may increase the amount of swelling gas in the lithium battery. This may lead to swelling, and thus may deteriorate the lifetime, high-temperature stability, and capacity characteristics of the lithium battery.

However, in lithium batteries according to the invention, the negative electrode layer may block reactions between the negative active material and the first electrolyte, thereby substantially preventing the occurrence of swelling. Consequently, the lifetime, high-temperature stability, and capacity characteristics of the lithium battery may be improved.

A lithiated intercalation compound that allows reversible intercalation and deintercalation of lithium ions may be used as a positive active material for the positive electrode. For example, the positive active material may be a material allowing reversible intercalation and deintercalation of lithium ions at a voltage of 3.0 V or greater (with respect to Li/Li⁺).

Nonlimiting examples of the positive active material include compounds represented by any one of the following formulae:
LiₐA_{1-b}X_{b}D₂ (where 0.95≤a≤1.1, and 0≤b≤0.5)
LiₐE_{1-b}X_{b}O_{2-c}D_{c} (where 0.95≤a≤1.1, 0≤b≤0.5, and 0≤c≤0.05)
LiE_{2-b}X_{b}O_{4-c}D_{c} (where 0≤b≤0.5 and 0≤c≤0.05)
LiₐNi_{1-b-c}Co_{b}B_{c}D_{α} (where 0.95≤a≤1.1, 0≤b≤0.5, 0≤c≤0.05, and 0<α≤2)
LiₐNi_{1-b-c}Co_{b}X_{c}O_{2-α}M_{α} (where 0.95≤a≤1.1, 0≤b≤0.5, 0≤c≤0.05, and 0<α<2)
LiₐNi_{1-b-c}Co_{b}X_{c}O_{2-α}M₂ (where 0.95≤a≤1.1, 0≤b≤0.5, 0≤c≤0.05, and 0<α<2)
LiₐNi_{1-b-c}Mn_{b}X_{c}D_{α} (where 0.95≤a≤1.1, 0≤b≤0.5, 0≤c≤0.05, and 0<α≤2)
LiₐNi_{1-b-c}Mn_{b}X_{c}O_{2-α}M_{α} (where 0.95≤a≤1.1, 0≤b≤0.5, 0≤c≤0.05, and 0<α<2)
LiₐNi_{1-b-c}Mn_{b}X_{c}O_{2-α}M₂ (where 0.95≤a≤1.1, 0≤b≤0.5, 0≤c≤0.05, and 0<α<2)
LiₐNi_{b}E_{c}G_{d}O₂ (where 0.90≤a≤1.1, 0≤b≤0.9, 0≤c≤0.5, and 0.001≤d≤0.1)
LiₐNi_{b}Co_{c}Mn_{d}GₑO₂ (where 0.90≤a≤1.1, 0≤b≤0.9, 0≤c≤0.5, 0≤d≤0.5, and 0.001≤e≤0.1)
LiₐNiG_{b}O₂ (where 0.90≤a≤1.1 and 0.001≤b≤0.1)
LiₐCoG_{b}O₂ (where 0.90≤a≤1.1 and 0.001≤b≤0.1)
LiₐMnG_{b}O₂ (where 0.90≤a≤1.1 and 0.001≤b≤0.1)
LiₐMn₂G_{b}O₄ (where 0.90≤a≤1.1 and 0.001≤b≤0.1)
QO₂
QS₂
LiQS₂
V₂O₅
LiV₂O₅
LiZO₂
LiNiVO₄
Li_{(3-f)}J₂(PO₄)₃ (where 0≤f≤2)
Li_{(3-f)}Fe₂(PO₄)₃ (where 0≤f≤2)
LiFePO₄

In the formulae above, A may be selected from nickel (Ni), cobalt (Co), manganese (Mn), and combinations thereof; X may be selected from aluminum (Al), nickel (Ni), cobalt (Co), manganese (Mn), chromium (Cr), iron (Fe), magnesium (Mg), strontium (Sr), vanadium (V), rare earth elements, and combinations thereof; D may be selected from oxygen (O), fluorine (F), sulfur (S), phosphorus (P), and combinations thereof; E may be selected from cobalt (Co), manganese (Mn), and combinations thereof; M may be selected from fluorine (F), sulfur (S), phosphorus (P), and combinations thereof; G may be selected from aluminum (Al), chromium (Cr), manganese (Mn), iron (Fe), magnesium (Mg), lanthanum (La), cerium (Ce), strontium (Sr), vanadium (V), and combinations thereof; Q may be selected from titanium (Ti), molybdenum (Mo), manganese (Mn), and combinations thereof; Z may be selected from chromium (Cr), vanadium (V), iron (Fe), scandium (Sc), yttrium (Y), and combinations thereof; and J may be selected from vanadium (V), chromium (Cr), manganese (Mn), cobalt (Co), nickel (Ni), copper (Cu), and combinations thereof.

These positive active materials may further include a surface coating layer. Nonlimiting examples of suitable positive active materials include positive active materials having a coating layer and positive active materials not having a coating layer. The coating layer may include at least one compound of a coating element selected from oxides, hydroxides, oxyhydroxides, oxycarbonates, and hydroxycarbonates of the coating element. These compounds for the coating layer may be amorphous or crystalline. Nonlimiting examples of the coating element for the coating layer include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), and mixtures thereof.

The coating layer may be formed using any method that does not adversely affect the physical properties of the positive active material when a compound of the coating element is used. For example, the coating layer may be formed using spray-coating, dipping, or the like.

Nonlimiting examples of the positive active material may be materials represented by Formula 3 below.
Liₓ(NiₚCo_{q}Mnᵣ)O_{y}

In Formula 3, x, p, q, r, and y indicate molar ratios of the elements.

In Formula 3, 0.95≤x≤1.05, 0<p<1, 0<q<1, 0<r<1, p+q+r=1, and 0<y≤2.

For example, 0.97≤x≤1.03, p may be 0.5, q may be 0.2, r may be 0.3, and y may be 2. However, x, p, q, r and y may be appropriately varied.

The positive active material may be LiNi_{0.5}Co_{0.2}Mn_{0.3}O₂. However, any suitable positive active material may be used.

Other nonlimiting examples of suitable positive active materials include materials represented by Formula 4 below.
LiNiₜ₁ Coₜ₂Alₜ₃O₂

In Formula 4, t1+t2+t3=1, and t1=t2=t3. However, t1, t2 and t3 are not limited thereto.

A nonlimiting example of a suitable positive active material is a mixture of a compound of Formula 4 and LiCoO₂.

The type of the lithium battery is not particularly limited, and may be, for example, a lithium secondary battery such as a lithium ion battery, a lithium ion polymer battery, a lithium sulfur battery, or the like, or a lithium primary battery.

According to a second aspect of the invention, a method of manufacturing the lithium battery of the invention in its first aspect includes: providing a lithium battery assembly including a positive electrode; a negative electrode including a negative active material containing lithium titanate; and a second electrolyte including a nonaqueous organic solvent, a lithium salt, and a first material containing at least one compound selected from compounds of Formula 1 and compounds of Formula 2; and performing a formation process on the lithium battery assembly to form a lithium battery, the formation process including aging the lithium battery assembly at a voltage of about 1.5V to about 2.8.

As used herein, the term "lithium battery assembly" refers to the assembly of the lithium battery before it is subjected to the formation process, and includes the negative electrode and the positive electrode, and the second electrolyte is injected into the assembly.

The term "second electrolyte" as used herein indicates the electrolyte solution contained in the "lithium battery assembly" before being subjected to the formation process.

The term "first electrolyte" as used herein indicates the electrolyte solution in the "lithium battery" after the formation process.

At least part of the first material in the second electrolyte may be involved in the formation of a negative electrode layer during the battery formation process. Thus, the composition of the "second electrolyte" in the lithium battery assembly (before being subjected to the formation process) may differ from the composition of the "first electrolyte" in the lithium battery (after the formation process is completed). For example, while the "second electrolyte" contains the first material, the "first electrolyte" may not contain the first material. Alternatively, the "first electrolyte" may contain a lower concentration of the first material than the "second electrolyte."

In manufacturing the lithium battery, the examples of the positive active materials, negative active materials, nonaqueous organic solvents, lithium salts, first materials, and second electrolytes listed above may be used.

A method of manufacturing the lithium battery will now be described.

The positive electrode may include a current collector and a positive active material layer disposed on the current collector. The positive electrode may be prepared according to the following process. A positive active material, a binder, and a solvent are mixed to prepare a positive active material composition. Then, the positive active material composition is directly coated on the current collector (for example, an aluminum (Al) current collector) and dried to form the positive active material layer, thereby forming a positive electrode plate. Alternatively, the positive active material composition may be cast on a separate support to form a positive active material layer, which is then separated from the support and laminated on the current collector to form a positive electrode plate. Nonlimiting examples of suitable solvents include N-methylpyrrolidone, acetone, water, and the like.

Examples of suitable positive active materials for the positive active material layer are described above.

The binder in the positive active material layer binds the positive active material particles together and to the current collector. Nonlimiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers including ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resins, and nylon.

The positive active material layer may further include a conducting agent for providing conductivity to the positive electrode. Any electron conducting material that does not induce a chemical change in the battery may be used. Nonlimiting examples of the conducting agent include carbonaceous materials, such as natural graphite, artificial graphite, carbon black, acetylene black, ketchen black, carbon fibers, and the like; metal-based materials, such as copper (Cu), nickel (Ni), aluminum (Al), silver (Ag), and the like, in powder or fiber form; and conductive materials, including conductive polymers, such as polyphenylene derivatives, and mixtures thereof.

The current collector may be aluminum (Al). However, any suitable material may be used.

Similarly, a negative active material, a conducting agent, a binder, and a solvent may be mixed to prepare a negative active material composition. The negative active material composition may be coated directly on a current collector (for example, a Cu current collector), or may be cast on a separate support to form a negative active material film, which is then separated from the support and laminated on a Cu current collector to obtain a negative electrode plate. In this regard, the amounts of the negative active material, the conducting agent, the binder, and the solvent may be amounts commonly used in lithium batteries.

The negative active material may be lithium titanate. A nonlimiting example of a suitable negative active material is Li₄Ti₅O₁₂. In addition to lithium titanate, negative active materials commonly used in the field, for example, natural graphite, silicon/carbon complexes (SiOₓ), silicon metal, silicon thin films, lithium metal, lithium alloys, carbonaceous materials, or graphite, may be used.

The conducting agent, the binder, and the solvent in the negative active material composition may be the same as those used in the positive active material composition. If required, a plasticizer may be further added to each of the positive active material composition and the negative active material composition to produce pores in the electrode plates.

A separator may be positioned between the positive electrode and the negative electrode according to the type of the lithium battery. Any separator commonly used for lithium batteries may be used. In some embodiments, the separator may have low resistance to the migration of ions in an electrolyte and have high electrolyte-retaining ability. Nonlimiting examples of materials that may be used to form the separator include glass fibers, polyester, Teflon, polyethylene, polypropylene, polytetrafluoroethylene (PTFE), and combinations thereof, each of which may be a nonwoven or woven fabric. A windable separator formed of a material such as polyethylene and polypropylene may be used for lithium ion batteries. A separator that may retain a large amount of an organic electrolyte may be used for lithium ion polymer batteries. These separators may be prepared according to the following process.

A polymer resin, a filler, and a solvent may be mixed to prepare a separator composition. Then, the separator composition may be coated directly on an electrode, and then dried to form a separator film. Alternatively, the separator composition may be cast on a separate support and then dried to form a separator composition film, which is then separated from the support and laminated on an electrode to form a separator film.

The polymer resin may be any material commonly used as a binder for electrode plates. Nonlimiting examples of the polymer resin include vinylidenefluoride/hexafluoropropylene copolymers, polyvinylidenefluoride, polyacrylonitrile, polymethylmethacrylate, and mixtures thereof. For example, a vinylidenefluoride/hexafluoropropylene copolymer containing about 8 to about 25 wt% of hexafluoropropylene may be used.

The separator is positioned between the positive electrode plate and the negative electrode plate to form a primary assembly, which is then wound or folded. The primary assembly is then encased in a cylindrical or rectangular battery case. Then, the second electrolyte is injected into the battery case, thereby completing the manufacture of a lithium battery assembly. Alternatively, a plurality of such primary battery assemblies may be laminated to form a bi-cell structure and impregnated with the second electrolyte. Then, the resulting structure may be encased in a pouch and sealed, thereby completing the manufacture of a lithium battery assembly.

The term "primary assembly" as used herein indicates an assembly of negative and positive electrodes having a particular structure before the injection of the second electrolyte.

The second electrolyte may contain a nonaqueous organic solvent, a lithium salt, and a first material.

The amount of the first material may be in a range of about 0.1 parts by weight to about 10 parts by weight based on 100 parts by weight of the total amount of the nonaqueous organic solvent and the lithium salt. For example, the amount of the first material may be in a range of about 1 part by weight to about 3 parts by weight. However, any suitable amount of the first material may be used. When the amount of the first material in the second electrolyte is within these ranges, the swelling characteristics of the lithium battery may be controllable. Then, the lithium battery assembly is subjected to a formation process. The formation process may include aging the lithium battery assembly at a voltage of about 1.8V to about 2.5V. The range of aging voltages is limited by the charge/discharge characteristics of the lithium titanate in the negative electrode.

For example, the aging process may be performed at a voltage of about 2.0V to about 2.1V. However, any suitable voltage may be applied during the aging process.

The aging process may be conducted for about 6 to about 48 hours. For example, the aging process may be conducted for about 6 to about 24 hours. However, the aging process may be conducted for any suitable duration of time.

During the formation process, a negative electrode layer may at least partially cover the surface of the negative electrode. The negative electrode layer may contain a reaction product of the first material in the second electrolyte with at least one of a second material and third material. The second material may include one or more of the other (i.e., other than the first material) components of the second electrolyte, and the third material may be one or more components of the negative electrode. For example, the negative electrode layer may cover a part of the surface or the entire surface of the negative electrode.

An O1s spectrum of spectra obtained by irradiating X-ray having an excitation energy of 1486.8eV onto the negative electrode layer may include a region A with a binding energy of 530.5eV, a region B with a binding energy of 532.0eV, and a region C with a binding energy of 533.5ev. A ratio of the binding energy intensity of region A to that of region B may be in a range of about 1:3 to about 1:7. For example, the ratio of the binding energy intensity of region A to that of region B may be in a range of about 1:4 to about 1:5. For example, the ratio of the binding energy intensity of region A to that of region B may be about 1:5. In addition, a ratio of a binding energy intensity of region B to that of region C may be in a range of about 10:10 to about 10:1. For example, the ratio of the binding energy intensity of region B to that of region C may be in a range of about 10:8 to about 10:4. For example, the ratio of the binding energy intensity of region B to that of region C may be about 10:6. In an embodiment, a ratio of the binding energy intensity of region A to those of regions B and C may be about 2:10:6 (A:B:C). The ratio of the binding energy intensity among the regions A, B and C may vary depending on the amount of the first material.

The second electrolyte may change into the first electrolyte as a result of the formation process. In particular, the second electrolyte is involved in forming the layer on the negative electrode during the formation process, thereby becoming the first electrolyte.

After the lithium battery assembly is aged at a voltage of about 1.8V to about 2.5V, the first material may not remain or may remain in the first electrolyte of the resulting lithium battery. In other words, the composition of the second electrolyte in the lithium battery assembly before the formation process may differ from the composition of the first electrolyte in the resulting lithium battery after the formation process, as described above.

The lithium battery assembly may be left at room temperature (about 25°C) for about 48 to about 72 hours prior to the aging process at a voltage of about 1.5V to about 2.8V.

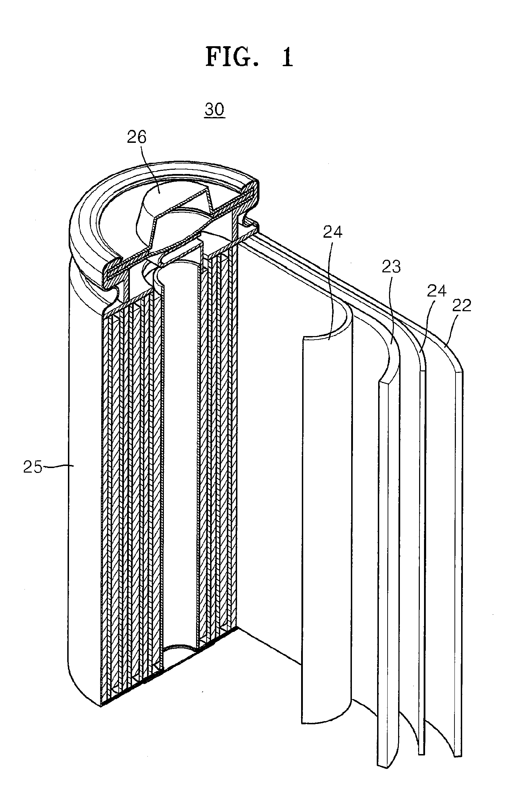

Figure 1 is a cross-sectional perspective view of a lithium battery 30 according to an embodiment of the present invention. Referring to Figure 1, the lithium battery 30 includes an electrode assembly having a positive electrode 23, a negative electrode 22, and a separator 24 between the positive electrode 23 and the negative electrode 22. The electrode assembly is contained within a battery case 25, and a sealing member 26 seals the battery case 25. An electrolyte (not shown) is injected into the battery case 25 to impregnate the electrode assembly. The lithium battery 30 is manufactured by sequentially stacking the positive electrode 23, the negative electrode 22, and the separator 24 on one another to form a stack, winding the stack into a spiral form, and inserting the wound stack into the battery case 25.

The following examples are provided for illustrative purposes only, and do not limit the scope of the present invention.

### Example 1

A Li₄Ti₅O₁₂ negative active material, a polyvinylidene fluoride (PVDF) binder, and an acetylene black conducting agent were mixed in a weight ratio of 90:5:5 in an N-methylpyrrolidone solvent to prepare a negative electrode slurry. The negative electrode slurry was coated on a copper (Cu) foil to form a thin negative electrode plate having a thickness of 14 µm, and the resulting structure was dried at 135°C for 3 hours or longer, and then pressed to manufacture a negative electrode.

A mixture of LiCoO₂ and LiNiₜ₁Coₜ₂Alₜ₃O₂ (t1+t2+t3=1, and t1=t2=t3) as a positive active material, a PVDF binder, and a carbon conducting agent in a weight ratio of 96:2:2 were dispersed in an N-methylpyrrolidone solvent to prepare a positive electrode slurry. The positive electrode slurry was coated on an aluminum (Al) foil to form a thin positive electrode plate having a thickness of 60 µm, and the resulting structure was dried at 135°C for 3 hours or longer, and then pressed to manufacture a positive electrode.

A 1.0M lithium salt (LiPF₆) and an anhydrous maleic acid (MA) were added to a mixed nonaqueous organic solvent containing ethylene carbonate (EC) and ethyl methyl carbonate (EMC) in a volume ratio of 3:7 to prepare a second electrolyte. The amount of the anhydrous maleic acid was 1 part by weight based on 100 parts by weight of the total amount of the nonaqueous organic solvent and the lithium salt.

The negative electrode and the positive electrode were wound using a porous polyethylene (PE) film as a separator, and pressed and placed into a battery case. Then, 3.5 mL of the second electrolyte was injected into the battery case to manufacture a pouch-type lithium battery assembly having a capacity of 500 mAh.

The thickness in the middle of the lithium battery assembly was measured using a Nonius. The result was about 4.41 mm.

Then, the lithium battery assembly was left at room temperature (25°C) for about 48 hours, and then subjected to a formation process of aging the lithium battery assembly at a voltage of about 2.0V to about 2.1V for about 12 hours, thereby completing the manufacture of a lithium battery.

### Example 2

A lithium battery assembly was manufactured in the same manner as Example 1, except that the amount of the anhydrous maleic acid was 2 parts by weight based on 100 parts by weight of the total amount of the nonaqueous organic solvent and the lithium salt.

The thickness of the lithium battery assembly was measured using the same method as in Example 1. The result was about 4.44 mm.

The formation process was conducted on the lithium battery assembly as in Example 1, thereby completing the manufacture of a lithium battery.

### Example 3

A lithium battery assembly was manufactured in the same manner as Example 1, except that the amount of the anhydrous maleic acid was 3 parts by weight based on 100 parts by weight of the total amount of the nonaqueous organic solvent and the lithium salt.

The thickness of the lithium battery assembly was measured using the same method as in Example 1. The result was about 4.43 mm.

The formation process was conducted on the lithium battery assembly as in Example 1, thereby completing the manufacture of a lithium battery.

### Example 4

A lithium battery assembly was manufactured in the same manner as Example 1, except that an anhydrous succinic acid (SA) was used instead of the anhydrous maleic acid.

The thickness of the lithium battery assembly was measured using the same method as in Example 1. The result was about 4.41 mm.

The formation process was conducted on the lithium battery assembly as in Example 1, thereby completing the manufacture of a lithium battery.

### Example 5

A lithium battery assembly was manufactured in the same manner as Example 4, except that the amount of the anhydrous succinic acid was 2 parts by weight based on 100 parts by weight of the total amount of the nonaqueous organic solvent and the lithium salt.

The thickness of the lithium battery assembly was measured using the same method as in Example 4. The result was about 4.40 mm.

The formation process was conducted on the lithium battery assembly as in Example 4, thereby completing the manufacture of a lithium battery.

### Example 6

A lithium battery assembly was manufactured in the same manner as Comparative Example 4, except that the amount of the anhydrous succinic acid was 3 parts by weight based on 100 parts by weight of the total amount of the nonaqueous organic solvent and the lithium salt.

The thickness of the lithium battery assembly was measured using the same method as in Example 4. The result was about 4.43 mm.

The formation process was conducted on the lithium battery assembly as in Example 4, thereby completing the manufacture of a lithium battery.

### Example 7

A lithium battery assembly was manufactured in the same manner as Example 2, except that 1 part by weight of anhydrous maleic acid and 1 part by weight of vinylene carbonate (VC) based on 100 parts by weight of the total amount of the nonaqueous organic solvent and the lithium salt was used in the second electrolyte, instead of 2 parts by weight of the anhydrous maleic acid.

The formation process was conducted on the lithium battery assembly as in Example 1, thereby completing the manufacture of a lithium battery.

### Comparative Example 1

A lithium battery assembly was manufactured in the same manner as Example 1, except that no anhydrous maleic acid was used in the second electrolyte.

The thickness of the lithium battery assembly was measured using the same method as Example 1. The result was about 6.52 mm.

The formation process was conducted on the lithium battery assembly as in Example 1, thereby completing the manufacture of a lithium battery.

### Comparative Example 2

A lithium battery assembly was manufactured in the same manner as Example 1, except that 2 parts by weight of fluoroethylene carbonate (FEC) based on 100 parts by weight of the nonaqueous organic solvent and the lithium salt was used in the second electrolyte instead of the anhydrous maleic acid.

The thickness of the lithium battery assembly was measured using the same method as in Example 1. The result was about 5.27 mm.

The formation process was conducted on the lithium battery assembly as in Example 1, thereby completing the manufacture of a lithium battery.

### Comparative Example 3

A lithium battery assembly was manufactured in the same manner as Example 1, except that 2 parts by weight of propane sultone (PS) based on 100 parts by weight of the nonaqueous organic solvent and the lithium salt was used in the second electrolyte instead of the anhydrous maleic acid.

The thickness of the lithium battery assembly was measured using the same method as in Example 1. The result was about 4.32 mm.

The formation process was conducted on the lithium battery assembly as in Example 1, thereby completing the manufacture of a lithium battery.

### Comparative Example 4

A lithium battery assembly was manufactured in the same manner as Example 1, except that 2 parts by weight of vinylene carbonate (VC) based on 100 parts by weight of the nonaqueous organic solvent and the lithium salt was used in the second electrolyte instead of the anhydrous maleic acid.

The thickness of the lithium battery assembly was measured using the same method as in Example 1. The result was about 4.31 mm.

The formation process was conducted on the lithium battery assembly as in Example 1, thereby completing the manufacture of a lithium battery.

### Comparative Example 5

A lithium battery assembly was manufactured in the same manner as in Example 1, except that a mixture of ethylene carbonate (EC), γ-butyrolactone (GBL), and ethyl methyl carbonate (EMC) in a volume ratio of 3:3:4 was used as the nonaqueous organic solvent instead of the mixture of EC and EMC, and no anhydrous maleic acid was used.

The thickness of the lithium battery assembly was measured using the same method as in Example 1. The result was about 4.30 mm.

The formation process was conducted on the lithium battery assembly as in Example 1, thereby completing the manufacture of a lithium battery.

### Comparative Example 6

A lithium battery assembly and a lithium battery were manufactured in the same manner as in Example 4, except that the amount of vinylene carbonate (VC) in the second electrolyte was varied to 1 part by weight.

### Evaluation Example 1

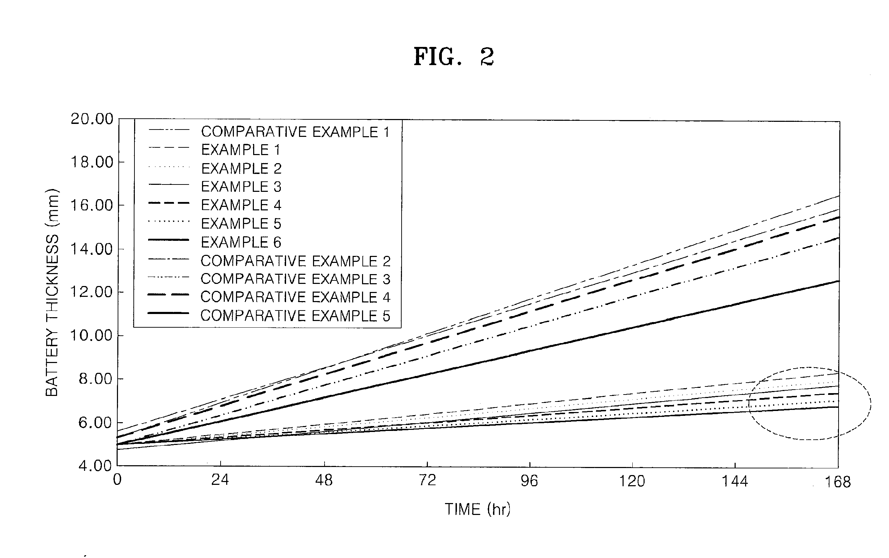

The thicknesses of the lithium batteries of Examples 1 to 6 and Comparative Examples 1 to 5 were measured immediately after the formation process and again after being left at about 60°C for 7 days, using the same measurement method as in Example 1. The results are shown in Figure 2 and Table 1 below.

**Table 1**

| | Electrolyte Composition | Initial Thickness (mm) | Thickness after 7 days at 60°C (mm) |
|---|---|---|---|
| Example 1 | EC/EMC=3/7(v/v) 1.0M LiPF6 MA (1 part by weight) | 4.41 | 7.10 |
| Example 2 | EC/EMC=3/7(v/v) 1.0M LiPF6 MA (2 parts by weight) | 4.44 | 7.22 |
| Example 3 | EC/EMC=3/7(v/v) 1.0M LiPF6 MA (3 parts by weight) | 4.43 | 7.29 |
| Example 4 | EC/EMC= 3/7(v/v) 1.0M LiPF6 SA (1 part by weight) | 4.41 | 7.71 |
| Example 5 | EC/EMC= 3/7(v/v) 1.0M LiPF6 SA (2 parts by weight) | 4.40 | 7.66 |
| Example 6 | EC/EMC= 3/7(v/v) 1.0M LiPF6 SA (3 parts by weight) | 4.43 | 7.49 |
| Comparative Example 1 | EC/EMC= 3/7(v/v) 1.0M LiPF6 | 6.52 | 15.97 |
| Comparative Example 2 | EC/EMC= 3/7(v/v) 1.0M LiPF6 FEC (2 parts by weight) | 5.27 | 16.03 |
| Comparative Example 3 | EC/EMC = 3/7(v/v) 1.0M LiPF6 PS (2 parts by weight) | 4.32 | 14.37 |
| Comparative Example 4 | EC/EMC = 3/7(v/v) 1.0M LiPF6 2 parts by weight of VC | 4.31 | 15.99 |
| Comparative Example 5 | EC/GBL/EMC = 3/3/4(v/v) 1.0M LiPF6 | 4.30 | 12.32 |

Referring to Table 1 and Figure 2, the lithium batteries of Examples 1 to 6 showed smaller changes in thickness compared to those of the lithium batteries of Comparative Examples 1 through 5.

### Evaluation Example 2

The surfaces of the negative electrodes of the lithium batteries of Comparative Example 1 and Example 1 (after the formation process), formed using the second electrolytes having the compositions as represented in Table 1, were analyzed using X-ray photoelectron spectroscopy (XPS).

**Table 2**

| | Composition of Second Electrolyte | | |
|---|---|---|---|
| Comparative Example 1 | EC/EMC = 3/7(v/v) | 1.OM LiPF₆ | - |
| Example 1 | EC/EMC = 3/7(v/v) | 1.0M LiPF₆ | 1 part by weight of MA |

Initially, the negative electrodes of the lithium batteries of Comparative Example 1 and Example 1 were sampled and mounted on XPS holders using double-sided carbon tape. The ZPS holders were loaded into an XPS fast lock chamber in a nitrogen atmosphere. The XPS instrument used in this analysis was an ESCA 250 Spectrometer (VG Scientific Ltd.). The chamber pressure was adjusted to about 5x10⁻¹⁰ mbar. The XPS analysis was conducted using a monochromatic Alkα X-ray source having an excitation energy of 1486.8eV. In XPS analysis, the area and thickness of each sample were 500 µm² and 5 nm, respectively.

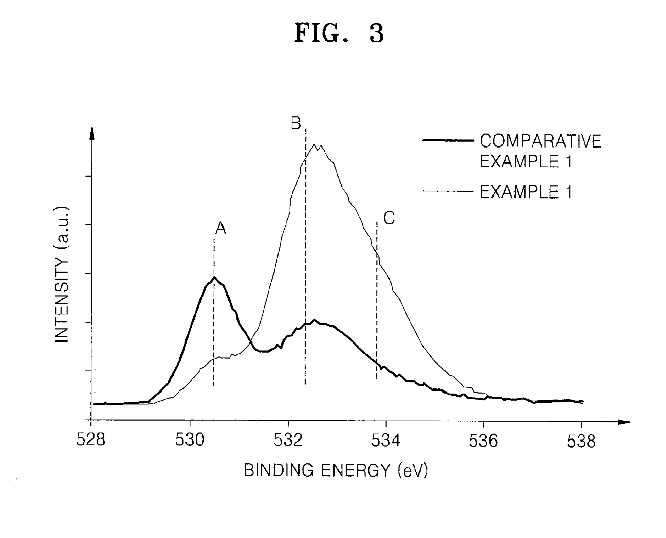

Figure 3 illustrates the O1s XPS spectra of the negative electrodes of Comparative Example 1 and Example 1.

Referring to Figure 3, the O1s XPS spectra of the surfaces of the negative electrodes of the lithium batteries of Comparative Example 1 and Example 1 show a region A with a binding energy of 530.5eV, a region B with a binding energy of 532.0eV, and a region C with a binding energy of 533.5eV. The binding energy intensities (in a.u.) of the regions A, B and C of the lithium batteries of Comparative Example 1 and Example 1 are shown in Table 3.

**Table 3**

| | Binding energy intensity of region A | Binding energy intensity of region B | Binding energy intensity of region C |
|---|---|---|---|
| Comparative Example 1 | 5 | 4 | 3 |
| Example 1 | 2 | 10 | 6 |

Referring to Table 3, for the lithium battery of Example 1, a ratio of binding energy intensities among the regions A, B and C was 2:10:6 (A:B:C).

The region A may be a region corresponding to an oxide such as lithium titanate.

Referring to Table 3, the intensity (height) of region A of the lithium battery of Example 1 is smaller than that of region A of the lithium battery of Comparative Example 1, supporting the conclusion that the negative electrode layer on the surface of the negative electrode of the lithium battery of Example 1 was thicker than that on the surface of the negative electrode of the lithium battery of Comparative Example 1.

The region B may be a region corresponding to a species containing oxygen atoms covalently bonded to carbon atoms, for example, an oxygen atom of a carbonate, an oxygen atom of a phosphate, or an oxygen atom of a polyethylene. Referring to Table 3, the intensity of region B of the lithium battery of Example 1 is larger than that of region B of the lithium battery of Comparative Example 1, indicating that a larger amount of carbonate was present on the surface of the negative electrode of the lithium battery of Example 1 than on the surface of region B of Comparative Example 1. Given that carbonate could be a starting material that may produce a gas (produced in a lithium battery and/or a lithium battery assembly) that causes the lithium battery to swell after the formation process or after being left at high temperatures, the larger amount of the remaining starting material that may produce the gas in the lithium battery of Example 1 than in the lithium battery of Comparative Example 1 supports the conclusion that a smaller amount of gas was generated in the lithium battery of Example 1 than in the lithium battery of Comparative Example 1.

As described above, according to one or more embodiments of the present invention, a lithium battery may have high capacity and a long lifetime.

Whilst the present invention has been described in connection with certain exemplary embodiments thereof, it is to be understood that the invention is not limited to the disclosed embodiments, but, on the contrary, in intended to cover various modifications and equivalent arrangements included within the scope of the appended claims.

## Claims

1. A lithium battery comprising:
a positive electrode:
a negative electrode including a negative active material comprising lithium titanate;
a first electrolyte comprising a nonaqueous organic solvent and a lithium salt; and
a negative electrode layer on at least a portion of a surface of the negative electrode, the negative electrode layer comprising a reaction product of a first material with at least one of a second material or a third material, wherein:
the first material comprises a compound selected from the group consisting of compounds represented by Formula 1, compounds represented by Formula 2, and combinations thereof,
the second material comprises at least one component of the first electrolyte, and
the third material comprises at least one component of the negative electrode:
**Formula 1 Formula 2** 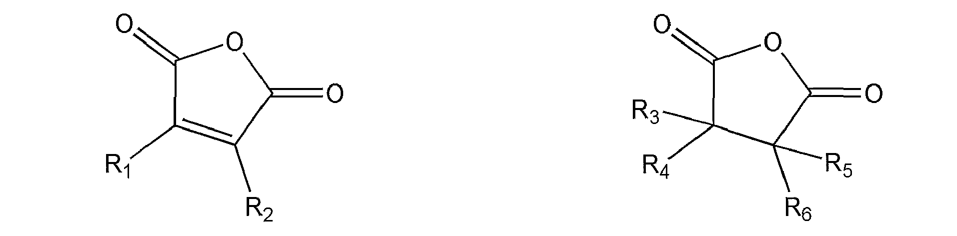
wherein R₁ through R₆ are each independently selected from the group consisting of hydrogen atoms; halogen atoms; hydroxyl groups; C₁-C₃₀ alkyl groups; C₂-C₃₀ alkenyl groups; C₁-C₃₀ alkoxy groups; C₅-C₃₀ aryl groups; C₂-C₃₀ heteroaryl groups; C₁-C₃₀ alkyl groups substituted with at least one substituent selected from the group consisting of hydroxyl groups, halogen atoms, C₁-C₃₀ alkyl groups, and C₁-C₃₀ alkoxy groups; C₂-C₃₀ alkenyl groups substituted with at least one substituent selected from the group consisting of hydroxyl groups, halogen atoms, C₁-C₃₀ alkyl groups, and C₁-C₃₀ alkoxy groups; C₁-C₃₀ alkoxy groups substituted with at least one substituent selected from the group consisting of hydroxyl groups, halogen atoms, C₁-C₃₀ alkyl groups, and C₁-C₃₀ alkoxy groups; C₅-C₃₀ aryl groups substituted with at least one substituent selected from the group consisting of hydroxyl groups, halogen atoms, C₁-C₃₀ alkyl groups, and C₁-C₃₀ alkoxy groups; and C₂-C₃₀ heteroaryl groups substituted with at least one substituent selected from the group consisting of hydroxyl groups, halogen atoms, C₁-C₃₀ alkyl groups, and C₁-C₃₀ alkoxy groups.

2. The lithium battery of claim 1, wherein R₁ through R₆ are each independently selected from the group consisting of hydrogen atoms; -F; methyl groups; ethyl groups; propyl groups; butyl groups; pentyl groups; hexyl groups; heptyl groups; octyl groups; methoxy groups; ethoxy groups; propoxy groups; butoxy groups; pentoxy groups; methyl groups substituted with at least one substituent selected from the group consisting of hydroxyl groups and -F; ethyl groups substituted with at least one substituent selected from the group consisting of hydroxyl groups and -F; propyl groups substituted with at least one substituent selected from the group consisting of hydroxyl groups and -F; butyl groups substituted with at least one substituent selected from the group consisting of hydroxyl groups and -F; pentyl groups substituted with at least one substituent selected from the group consisting of hydroxyl groups and -F; hexyl groups substituted with at least one substituent selected from the group consisting of hydroxyl groups and -F; heptyl groups substituted with at least one substituent selected from the group consisting of hydroxyl groups and -F; octyl groups substituted with at least one substituent selected from the group consisting of hydroxyl groups and -F; methoxy groups substituted with at least one substituent selected from the group consisting of hydroxyl groups and -F; ethoxy groups substituted with at least one substituent selected from the group consisting of hydroxyl groups and -F; propoxy groups substituted with at least one substituent selected from the group consisting of hydroxyl groups and -F; butoxy groups substituted with at least one substituent selected from the group consisting of hydroxyl groups and -F; and pentoxy groups substituted with at least one substituent selected from the group consisting of hydroxyl groups and -F.

3. The lithium battery of claim 1 or claim 2, wherein R₁ through R₆ are all hydrogen atoms.

4. The lithium battery of any preceding claim, wherein the first electrolyte further comprises the first material.

5. The lithium battery of any preceding claim, wherein the negative electrode further comprises a conducting agent.

6. The lithium battery of any preceding claim, wherein an O1s spectrum of spectra obtained by irradiating X-ray having an excitation energy of 1486.8eV onto the negative electrode layer includes a region A with a binding energy of 530.5eV, and a region B with a binding energy of 532.0eV, wherein a ratio of a binding energy intensity of the region A to a binding energy intensity of the region B is in a range of about 1:3 to about 1:7.

7. The lithium battery of any preceding claim, wherein an O1s spectrum of spectra obtained by irradiating X-ray having an excitation energy of 1486.8eV onto the negative electrode layer includes a region B with a binding energy of 532.0eV, and a region C with a binding energy of 533.5eV, wherein a ratio of a binding energy intensity of the region B to a binding energy intensity of the region C is in a range of about 10:10 to about 10:1.

8. The lithium battery of any preceding claim, wherein an O1s spectrum of spectra obtained by irradiating X-ray having an excitation energy of 1486.8eV onto the negative electrode layer includes a region A with a binding energy of 530.5eV, a region B with a binding energy of 532.0eV, and a region C with a binding energy of 533.5eV, wherein a ratio of a binding energy intensity of the region A to binding energy intensities of the regions B and C is about 2:10:6.

9. A method of manufacturing a lithium battery, comprising:
providing a lithium battery assembly including:
a positive electrode;
a negative electrode including a negative active material comprising lithium titanate; and
a second electrolyte comprising a nonaqueous organic solvent, a lithium salt, and a first material comprising at least one compound selected from the group consisting of compounds represented by Formula 1 or compounds represented by Formula 2; and
performing a formation process on the lithium battery assembly to form a lithium battery, the formation process including aging the lithium battery assembly at a voltage of about 1.5V to about 2.8,
wherein the lithium battery comprises:
a positive electrode;
a negative electrode including a negative active material comprising lithium titanate;
a first electrolyte comprising a nonaqueous organic solvent and a lithium salt; and
a negative electrode layer on at least a portion of a surface of the negative electrode, the negative electrode layer comprising a reaction product of a first material with at least one of a second material or a third material, wherein:
the first material comprises a compound selected from the group consisting of compounds represented by Formula 1, compounds represented by Formula 2, and combinations thereof,
the second material comprises at least one component of the first electrolyte, and
the third material comprises at least one component of the negative electrode:
**Formula 1 Formula 2** 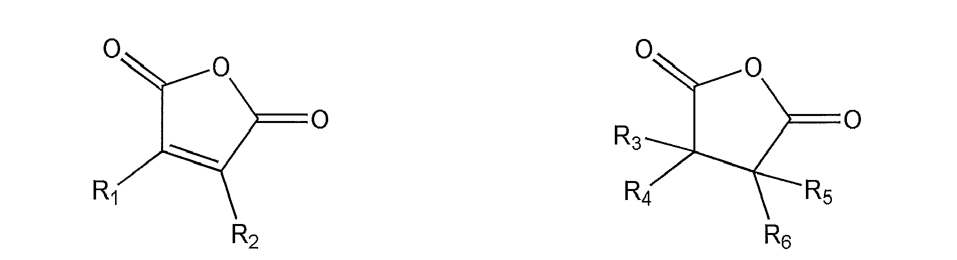
wherein R₁ through R₆ are each independently selected from the group consisting of hydrogen atoms; halogen atoms; hydroxyl groups; C₁-C₃₀ alkyl groups; C₂-C₃₀ alkenyl groups; C₁-C₃₀ alkoxy groups; C₅-C₃₀ aryl groups; C₂-C₃₀ heteroaryl groups; C₁-C₃₀ alkyl groups substituted with at least one substituent selected from the group consisting of hydroxyl groups, halogen atoms, C₁-C₃₀ alkyl groups, and C₁-C₃₀ alkoxy groups; C₂-C₃₀ alkenyl groups substituted with at least one substituent selected from the group consisting of hydroxyl groups, halogen atoms, C₁-C₃₀ alkyl groups, and C₁-C₃₀ alkoxy groups; C₁-C₃₀ alkoxy groups substituted with at least one substituent selected from the group consisting of hydroxyl groups, halogen atoms, C₁-C₃₀ alkyl groups, and C₁-C₃₀ alkoxy groups; C₅-C₃₀ aryl groups substituted with at least one substituent selected from the group consisting of hydroxyl groups, halogen atoms, C₁-C₃₀ alkyl groups, and C₁-C₃₀ alkoxy groups; and C₂-C₃₀ heteroaryl groups substituted with at least one substituent selected from the group consisting of hydroxyl groups, halogen atoms, C₁-C₃₀ alkyl groups, and C₁-C₃₀ alkoxy groups.

10. The method of claim 9, wherein R₁ through R₆ are all hydrogen atoms.

11. The method of claim 9 or claim 10, wherein the first material is present in the second electrolyte in an amount in a range of about 0.1 to about 10 parts by weight based on 100 parts by weight of the total weight of the nonaqueous organic solvent and the lithium salt.

12. The method of any of claims 9 to 11, wherein an O1s spectrum of spectra obtained by irradiating X-ray having an excitation energy of 1486.8eV onto the negative electrode layer includes a region A with a binding energy of 530.5eV, and a region B with a binding energy of 532.0eV, wherein a ratio of a binding energy intensity of the region A to a binding energy intensity of the region B is in a range of about 1:3 to about 1:7.

13. The method of any of claims 9 to 12, wherein an O1s spectrum of spectra obtained by irradiating X-ray having an excitation energy of 1486.8eV onto the negative electrode layer includes a region B with a binding energy of 532.0eV, and a region C with a binding energy of 533.5eV, wherein a ratio of a binding energy intensity of the region B to a binding energy intensity of the region C is in a range of about 10:10 to about 10:1.

14. The method of any of claims 9 to 13, wherein an O1s spectrum of spectra obtained by irradiating X-ray having an excitation energy of 1486.8eV onto the negative electrode layer includes a region A with a binding energy of 530.5eV, a region B with a binding energy of 532.0eV, and a region C with a binding energy of 533.5eV, wherein a ratio of a binding energy intensity of the region A to binding energy intensities of the regions B and C is about 2:10:6.

15. The method of any of claims 9 to 14, wherein the formation process further comprises leaving the lithium battery assembly at room temperature for about 48 to about 72 hours prior to the aging of the lithium battery assembly at a voltage of about 1.5V to about 2.8V.

16. The lithium battery of any of claims 1 to 8 or the method of any of claims 9 to 15, wherein the first material is at least one of anhydrous maleic acid or anhydrous succinic acid.
